# EUROPEAN PATENT APPLICATION

(11) **EP 2 537 575 A1**
(43) Date of publication of application: **26.12.2012**
(21) Application number: 12172305.0
(22) Date of filing: 15.06.2012
(51) Int. Cl.: B01D 53/14

(54) **Carbon dioxide capturing device and carbon dioxide capturing method**

(30) Priority: 21.06.2011 JP 2011137716
(71) Applicant: Kabushiki Kaisha Toshiba, Tokyo 105-8001 (JP)
(72) Inventor: UDATSU, Mitsuru, Minato-ku, Tokyo 105-8001 (JP); SUZUKI, Kensuke, Minato-ku, Tokyo 105-8001 (JP); SAITO, Satoshi, Minato-ku, Tokyo 105-8001 (JP); HODOTSUKA, Masatoshi, Minato-ku, Tokyo 105-8001 (JP); KITAMURA, Hideo, Minato-ku, Tokyo 105-8001 (JP); EGAMI, Norihide, Minato-ku, Tokyo 105-8001 (JP)
(74) Representative: Granleese, Rhian Jane

(57) **Abstract**

In accordance with an embodiment, a carbon dioxide capturing device includes an absorption tower(20), a regeneration tower(30), and a cooling unit(CH##). A gas containing carbon dioxide and a lean liquid is introduced to the absorption tower which brings the gas and the lean liquid into contact with each other to generate a rich liquid. The regeneration tower generates a lean liquid by diffusing vapor containing carbon dioxide from the rich liquid from the absorption tower, and then returns the lean liquid to the absorption tower. The cooling unit cools at least one of the gas, the lean liquid, and the rich liquid. The cooling unit includes first and second coolers(CL1,CL2) connected in series to each other, by first and second cooling mediums(CM1,CM2), respectively.

The first cooling medium is generated outside the device without using power for cooling in the device. The first cooler is located upstream of the second cooler.

## Description

### FIELD

Embodiments described herein relate generally to a carbon dioxide capturing device and a carbon dioxide capturing method.

### BACKGROUND

Recently, in connection with the capture of carbon dioxide, a carbon dioxide capture and storage (CCS) technique has been drawing attention as an effective measure against the problem of global warming causing anxiety on a global scale. In particular, methods of capturing carbon dioxide by a water solution have been studied for process exhaust gases generated in thermal power plants, iron works and so on.

However, according to conventional carbon dioxide capturing techniques, a carbon dioxide containing exhaust gas and an absorbing liquid supplied to an absorption tower and the inside of the absorption tower need to be cooled to keep a low temperature in the absorption tower so that high carbon dioxide capturing performance is maintained. In order to inhibit the discharge of absorbing liquid components within the exhaust gases in the absorption tower and a regeneration tower to the outside of a carbon dioxide capturing system (hereinafter simply referred to as a "system"), it is necessary to decrease the temperature of a gas condenser for cooling the exhaust gases from the absorption tower and the regeneration tower. Another problem is that the concentration of the absorbing liquid drops if a large amount of water included in a carbon dioxide containing gas is introduced into a carbon dioxide capturing device without being cooled. This leads to high cooling power energy on the one hand and low carbon dioxide separating/capturing performance on the other.

### BRIEF DESCRIPTION OF THE DRAWINGS

In the accompanying drawings:
FIG. 1(a) is a diagram showing the overall configuration of a carbon dioxide capturing device according to Embodiment 1;
FIG. 1(b) is a diagram illustrating a cooler provided in the carbon dioxide capturing device shown in FIG. 1(a);
FIG. 2 is a graph showing an example of the relation between the cooling temperature for a carbon dioxide containing gas and the amount of water brought into a system;
FIG. 3 is a graph showing an example of the relation between the temperature of an exhaust gas in a dispersion prevention facility and the amount of a dispersed absorbing liquid;
FIG. 4 is a table showing an example of the effect of reducing cooling power energy by the carbon dioxide capturing device according to Embodiment 1;
FIG. 5 is a diagram showing the overall configuration of a carbon dioxide capturing device according to Embodiment 2; and
FIG. 6 is a table showing an example of the effect of reducing cooling power energy by the carbon dioxide capturing device according to Embodiment 2.

### DETAILED DESCRIPTION

In accordance with an embodiment, a carbon dioxide capturing device includes an absorption tower, a regeneration tower, and a cooling unit. A gas containing carbon dioxide and a lean liquid which absorbs carbon dioxide from the gas is introduced to the absorption tower. The absorption tower brings the gas and the lean liquid into contact with each other to generate a rich liquid in which carbon dioxide is absorbed and then discharges the rich liquid. The regeneration tower is configured to generate a lean liquid in which carbon dioxide is separated from the rich liquid by heating the rich liquid from the absorption tower and diffusing vapor containing carbon dioxide from the rich liquid, and then return the lean liquid to the absorption tower. The cooling unit is configured to cools at least one of the gas, the lean liquid, and the rich liquid. The cooling unit comprises first and second coolers which are connected in series to each other and to which first and second cooling mediums are introduced, respectively. The first cooling medium is generated outside the carbon dioxide capturing device without using power for cooling in the carbon dioxide capturing device. The second cooling medium is generated by using power for cooling in the carbon dioxide capturing device. The first cooler is located upstream of the second cooler.

Embodiments will now be explained with reference to the accompanying drawings. Like components are given like reference numbers throughout the drawings and repeated descriptions thereof are approximately omitted.

### (1) Embodiment 1

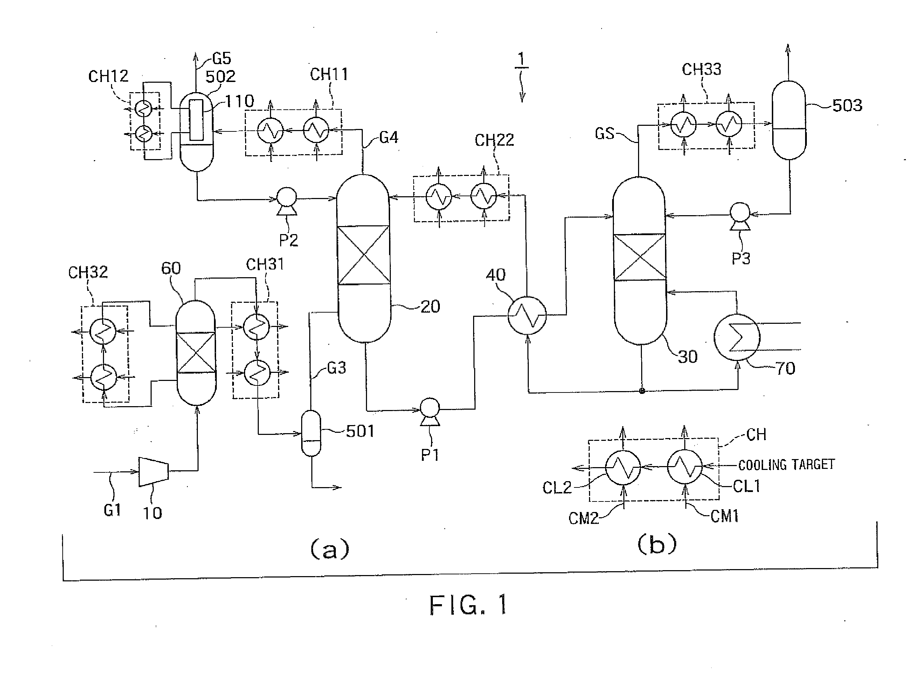

FIG. 1(a) is a diagram showing the overall configuration of a carbon dioxide capturing device according to Embodiment 1. FIG. 1(b) is a diagram illustrating a cooler provided in the carbon dioxide capturing device 1 shown in FIG. 1(a). The carbon dioxide capturing device 1 according to the present embodiment includes an absorption tower 20, a regeneration tower 30, a regenerated heat exchanger 40, coolers CH31, CH32, CH11, CH12, and CH33, a gas-liquid separators 501 to 503, a desulfurizer 60, a reboiler 70, and pumps P1 to P3.

The absorption tower 20 is constituted by, for example, a counter-flow gas-liquid contactor. A carbon dioxide containing exhaust gas G1 is supplied to the absorption tower 20 from its bottom, and an absorbing liquid for absorbing carbon dioxide (hereinafter referred to as a "lean liquid LL") is introduced to the absorption tower from its top. The absorption tower 20 brings the carbon dioxide containing exhaust gas G1 into gas-liquid contact with the lean liquid LL so that the carbon dioxide containing exhaust gas G1 is absorbed by the lean liquid LL. The absorption tower 20 thereby generates a rich liquid RL in which carbon dioxide is absorbed, and then discharges the rich liquid RL from its bottom. The absorption tower 20 is structured to have a filler or a tray disposed therein for efficient gas-liquid contact. A carbon dioxide containing gas G3 supplied to the absorption tower 20 may be, but not exclusively, for example, a combustion exhaust gas or a process exhaust gas. As the lean liquid LL, it is possible to use, but not exclusively, for example, an amine solution such as monoethanolamine or diethanolamine, and an alkaline solution, as well as an ionic liquid and its solution. A decarbonated gas G4 after the removal of carbon dioxide in the absorption tower 20 is discharged from the top of the absorption tower 20.

The rich liquid RL discharged from the bottom of the absorption tower 20 is introduced into the regenerated heat exchanger 40 through the pump P1. The regenerated heat exchanger 40 heats the introduced lean liquid LL, and supplies the heated lean liquid LL to the regeneration tower 30. In the present specification, the lean liquid LL is defined as an absorbing liquid containing a smaller amount of carbon dioxide than the rich liquid RL.

The regeneration tower 30 heats the introduced lean liquid LL, and thereby diffuses and releases most of carbon dioxide from the lean liquid LL together with vapor, and then discharges a carbon dioxide containing vapor GS from its top. The regeneration tower 30 is also structured to have a filler or a tray disposed therein for efficient gas-liquid contact. The lean liquid LL after the removal of most of carbon dioxide is returned to the absorption tower 20 through the regenerated heat exchanger 40.

In the present embodiment, the carbon dioxide containing exhaust gas G1 is brought in from an inlet 10, and supplied to the absorption tower 20 via the desulfurizer 60, the cooler CH31, and the gas-liquid separator 501. The desulfurizer 60 will be described later.

Each of the coolers CH31, CH32, CH11, CH12, and CH33 includes a first cooler CL1 and a second cooler CL2 connected in series to the first cooler CL1 as comprehensively indicated by a sign CH in FIG. 1(b), and uses the two-step coolers CL1 and CL2 to cool an introduced gas. The cooler CH can include, but not exclusively, a heat exchanger such as a plate type heat exchanger, a spiral heat exchanger, or a shell-and-tube heat exchanger. To explain the cooler CH31, the cooler CH31 cools the carbon dioxide containing exhaust gas G1 to a low temperature within room temperature, preferably to a temperature which is equal to or less than 40°C and which is equal to or more than the temperature of the coagulation point of a single component or a mixture included in the carbon dioxide containing exhaust gas G1. As a result, water in the carbon dioxide containing exhaust gas G1 is condensed into a liquid.

As shown in FIG. 1(b), a first cooling medium CM1 is supplied to the first cooler CL1 of the cooler CH. The first cooling medium CM1 is a cooling medium generated substantially without using power, and includes, for example, seawater, river water, tap water, a cooling medium cooled by, for example, an unshown cooling tower outside the carbon dioxide capturing device 1 according to the present embodiment, or secondary cooling water or a secondary cooling medium cooled by the above-mentioned cooling mediums. The cooling medium is not exclusively tap water or treated water, and includes, for example, deionized water, an alcoholic solution, and ethylene glycol. The same applies to the secondary cooling medium described later. In the present embodiment, the first cooling medium CM1 corresponds to, for example, a first cooling medium. In the present specification, "to be generated substantially without using power" means that the cooling medium is already generated outside the carbon dioxide capturing device and that the power of, for example, pumps is used for passing the cooling medium through the carbon dioxide capturing device but no additional power is used for cooling in the carbon dioxide capturing device.

A second cooling medium CM2 is supplied to the second cooler CL2. In contrast to the first cooling medium CM1, the second cooling medium CM2 is a cooling medium generated by using power, and includes cool water or a cooling medium cooled by, for example, a refrigerator such as a chiller, a heat pump outside the carbon dioxide capturing device 1 according to the present embodiment, and a cryogenic cooling medium such as cool water or a cooling medium cooled by liquid nitrogen, dry ice, or liquid helium. In the present embodiment, the second cooling medium CM2 corresponds to, for example, a second cooling medium.

The gas-liquid separator 501 discharges condensed water generated in the cooler CH31 to the outside of the carbon dioxide capturing device 1, and thereby prevents a large amount of water from being brought into the carbon dioxide capturing device 1. This makes it possible to prevent the drop of the concentration of the lean liquid LL and the resulting deterioration of carbon dioxide capturing performance and to maintain the capturing performance while minimizing the operation for managing the concentration of the lean liquid LL. The carbon dioxide containing exhaust gas G1 which has passed through the gas-liquid separator 501 is supplied to the absorption tower 20 as the carbon dioxide containing exhaust gas G3. In the present embodiment, the gas-liquid separator 501 and the later-described gas-liquid separators 502 and 503 correspond to, for example, water removers.

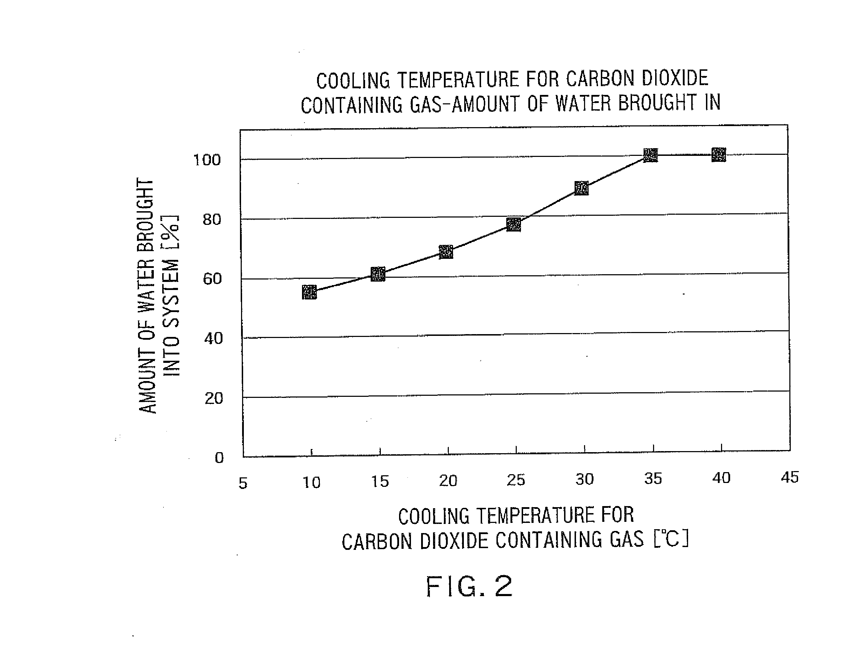

FIG. 2 is a graph showing the relation between the cooling temperature for the carbon dioxide containing gas and the amount of water brought into the system. As appreciated from the graph in FIG. 2, the amount of water brought into the absorption tower 20 is smaller when the temperature of the carbon dioxide containing exhaust gas G1 is lower. It is therefore preferable that the temperature of the carbon dioxide containing exhaust gas G1 is lower than the temperature to which the first cooling medium CM1 including, for example, seawater and river water can cool. According to the present embodiment, the carbon dioxide containing exhaust gas G1 is cooled by the first cooling medium CM1 generated substantially without using power, and then further cooled by the second cooling medium CM2 generated by using power, so that the carbon dioxide containing exhaust gas G1 can be cooled to a required temperature (room temperature) while power is suppressed.

The desulfurizer 60 is disposed between the inlet 10 and the cooler CH31, and removes an acidic component such as a ulphur oxide component Sox included in the carbon dioxide containing exhaust gas G1. The desulfurizer 60 is provided with the cooler CH32, so that the carbon dioxide containing exhaust gas G1 is also cooled when the acidic component is removed.

The decarbonated gas G4 discharged from the absorption tower 20 is supplied to the cooler CH11, and is cooled to a temperature at which condensed water is generated, in the same manner as the cooling method described above in connection with the cooler CH31. The gas containing the cooled condensed water is separated into a gas and a liquid by the gas-liquid separator 502, and the condensed water is partly or entirely supplied again to, for example, the absorption tower 20 through the pump P2 in the carbon dioxide capturing device 1. This prevents water vapor in the decarbonated gas G4 from being discharged to the outside of the carbon dioxide capturing device 1. The cooler CH11 is provided prior to the gas-liquid separator 502 in the present embodiment, but is not exclusively provided in this form, and may be, for example, incorporated in the gas-liquid separator 502.

The regeneration tower 30 is constituted by, for example, a counter-flow gas-liquid contactor, and a liquid retained therein is heated in the reboiler 70 by heat exchange with high-temperature steam which is heat supplied from outside. The carbon dioxide containing vapor GS is supplied to the cooler CH33, and is cooled to a temperature at which condensed water is generated, in the same manner as the cooling method described above in connection with the cooler CH31. This prevents water vapor in the carbon dioxide containing vapor GS from being discharged to the outside of the carbon dioxide capturing device 1. The condensed water generated in the cooler CH33 passes through the gas-liquid separator 503, and a gas component mainly including carbon dioxide and a liquid component mainly including water in the carbon dioxide containing vapor GS are partly or entirely supplied again to the system, for example, the regeneration tower 30 by the pump P3.

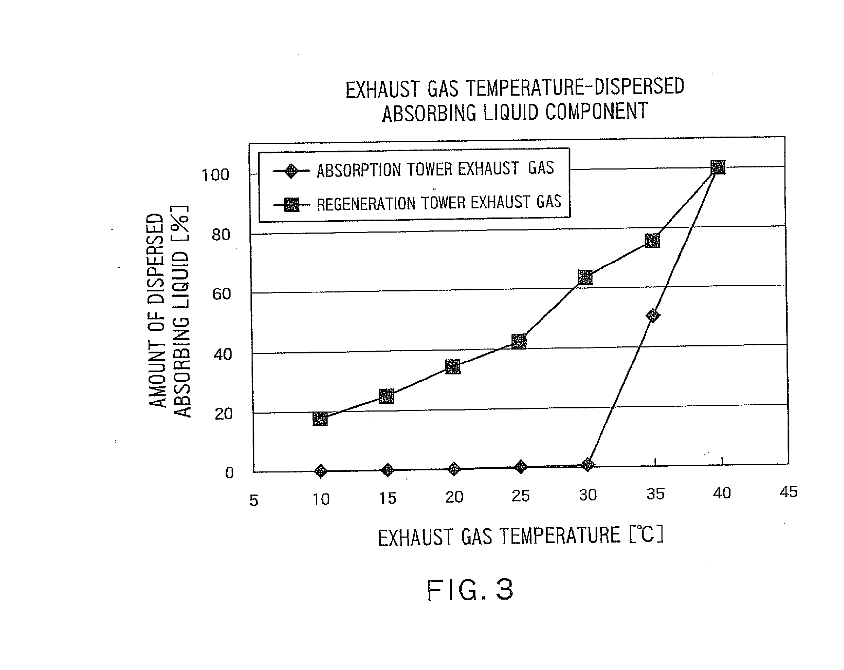

The gas-liquid separator 502 has a water washing unit 110 therein, and thereby prevents the dispersion of the lean liquid. The dispersion amount of the absorbing liquid is determined by the vapor pressure at the temperature of the exhaust gas. Therefore, the water washing unit 110 needs to be sufficiently cooled, so that the cooler CH12 is provided in the present embodiment, and the decarbonated gas G4 in the gas-liquid separator 502 is cooled. In the present embodiment, the water washing unit 110 corresponds to, for example, a dispersion prevention unit. The water washing unit 110 does not need to be incorporated in the gas-liquid separator 502, and may be disposed prior to or subsequently to the gas-liquid separator 502 before the introduction of a gas to be treated or after the discharge of the gas. The water washing unit 110 is not exclusively disposed prior to or subsequently to the gas-liquid separator 502 and in the gas-liquid separator 502, and is also preferably disposed in the gas-liquid separator 503 or disposed prior to or subsequently to the gas-liquid separator 503. An example of the relation between the temperature of the exhaust gas in the dispersion prevention facility and the amount of a dispersed absorbing liquid is shown in a graph of FIG. 3. In the graph of FIG. 3, the dispersion amount when the exhaust gas temperature is set at 40°C is 100%, and decreases at temperatures ranging from 5°C to 45°C are shown. Both the decarbonated gas G4 from the absorption tower 20 and the carbon dioxide containing vapor GS from the regeneration tower 30 decrease in the dispersion amount of the absorbing liquid components along with the decrease of temperature. In order to hold down the dispersion amount of the absorbing liquid components, the temperature needs to be lower than the temperature to which natural cooling water such as seawater and river water can cool. According to the present embodiment, the cooler CH12 is provided in the water washing unit 110 or provided prior to or subsequently to the water washing unit 110, so that the gas can be cooled while power necessary for cooling is suppressed.

Along the passage where the lean liquid LL is supplied to the absorption tower 20 from the regeneration tower 30, a cooler CH22 is further provided between the regenerated heat exchanger 40 and the absorption tower 20. In the same manner as the above-described method of cooling by the cooler CH31, the lean liquid LL is cooled by a first cooling medium and a second cooling medium that are supplied from the outside, and then returned to the absorption tower 20.

Now, a carbon dioxide capturing method using the carbon dioxide capturing device 1 according to the present embodiment is described as a carbon dioxide capturing method according to Embodiment 1.

Initially, as a first process, the carbon dioxide containing exhaust gas G1 and the lean liquid LL are introduced into the absorption tower 20 where the carbon dioxide containing exhaust gas G1 and the lean liquid LL come into contact with each other and the carbon dioxide containing exhaust gas G1 is absorbed in the lean liquid LL to generate the rich liquid RL. In this first process, the step of absorption is preferably carried out at a low temperature to improve carbon dioxide absorbing performance. Thus, regarding the carbon dioxide containing gas G3 introduced into the absorption tower 20, the carbon dioxide containing exhaust gas G1 is cooled to a low temperature within the room temperature, preferably to 35°C to 40°C or less by a cooling process that uses the cooler CH31, and then supplied to the absorption tower 20 as the carbon dioxide containing gas G3. The lean liquid LL introduced into the absorption tower 20 from the regenerated heat exchanger 40 is also cooled to a low temperature within the room temperature, preferably to 35°C to 40°C or less by a cooling process that uses the cooler CH22, and then supplied to the absorption tower 20.

In order to control the discharge amount of water vapor from the system, the water vapor contained in the decarbonated gas G4 discharged from the absorption tower 20 is cooled by a cooling process that uses the cooler CH11, and condensed water is generated. The generated condensed water is partly or entirely returned to the absorption tower 20 via the gas-liquid separator 502 by the pump P2.

The rich liquid RL generated by the first process is supplied to the regeneration tower 30 by the pump P2, and heated by the reboiler 70 in a second process. As a result, the carbon dioxide containing vapor GS is discharged from the top of the regeneration tower 30, and the lean liquid LL in which carbon dioxide is separated from the rich liquid RL is generated and returned to the absorption tower 20 via the regenerated heat exchanger 40 for reuse in the first process. In this way, the rich liquid RL which has captured carbon dioxide is regenerated as the lean liquid LL.

In order to control the discharge amount of water vapor from the system, the water vapor in the carbon dioxide containing vapor GS discharged from the regeneration tower 30 is also cooled by a cooling process, and condensed water is thereby generated and separated by the gas-liquid separator 503. The condensed water is partly or entirely returned to the regeneration tower 30 from the gas-liquid separator 503 by the pump P3, and thereby returned to the system.

In the series of processes described above, the carbon dioxide containing exhaust gas G1, the lean liquid LL supplied to the absorption tower 20, the decarbonated gas G4, the carbon dioxide containing vapor GS, and the desulfurizer 60 are cooled through the first cooler CL1 by the first cooling medium including, for example, seawater generated substantially without using power, and further introduced into the second cooler and then cooled by, for example, cool water which is generated by cooling to a low temperature by use of a power-driven device such as a chiller. Thus, power cooling energy can be reduced as compared with the case where a cooling target is cooled solely by the second cooling medium which is generated by cooling to a low temperature by use of a power-driven device such as a chiller.

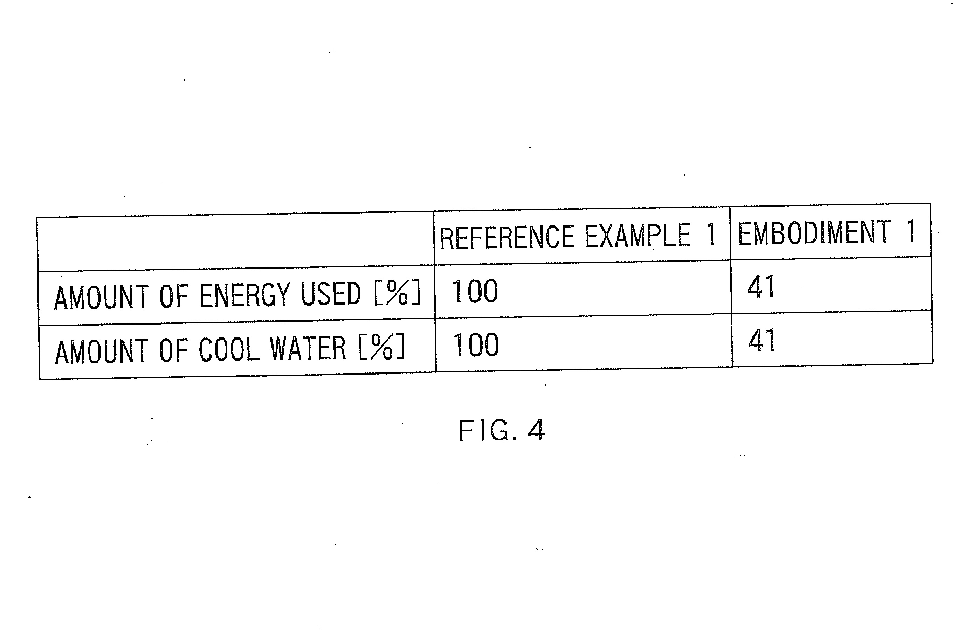

In order to ascertain the power energy reducing effect according to the present embodiment, Reference example 1 that only uses the second cooling medium generated by using power is compared with the present embodiment by use of a process simulator. In the comparison, the same conditions are provided regarding the carbon dioxide capture amount and capture rate. In the present embodiment, the amount of vapor introduced into the regeneration tower 30 is reduced to provide the same performance condition as Reference example 1. An example of simulative comparison results is shown in a table of FIG. 4.

As shown in FIG. 4, cooling power energy can be reduced. Here, capturing energy in Reference example 1 is regarded as a reference of 100% to find the energy reduction rate according to the present embodiment. In the same manner, the amounts of necessary cooling water are compared. Reference example 1 only uses cool water cooled by a chiller for cooling, and is under the same condition except that the first cooler CL1 according to the present embodiment is not used. The cooling power energy in the present embodiment is energy necessary to cool to less than 40°C by using both the first cooler CL1 and the second cooler CL2. The cooling power energy in Reference example 1 is energy necessary to cool a cooling target to less than 40°C by only using a cooler corresponding to the second cooler CL2 according to the present embodiment.

Thus, according to the present embodiment, the cooling power energy can be reduced to 41% as compared with Reference example 1, as shown in FIG. 4. Here, cooling power in Reference example 1 is set at 100% to find the cooling power energy reduction rate according to Example 2. The comparison with Comparative example 1 is also shown regarding the amount of necessary cooling water in the same manner. Reference example 1 is based on the assumption that the chiller is used for cooling. Otherwise, the same advantageous effects are also provided when equipment such as a refrigerator is used for cooling or when a cryogenic cooling medium such as liquid nitrogen, dry ice, or liquid helium is used. When the cryogenic cooling medium is used, the power necessary to cool the cryogenic cooling medium can be reduced.

### (2) Embodiment 2

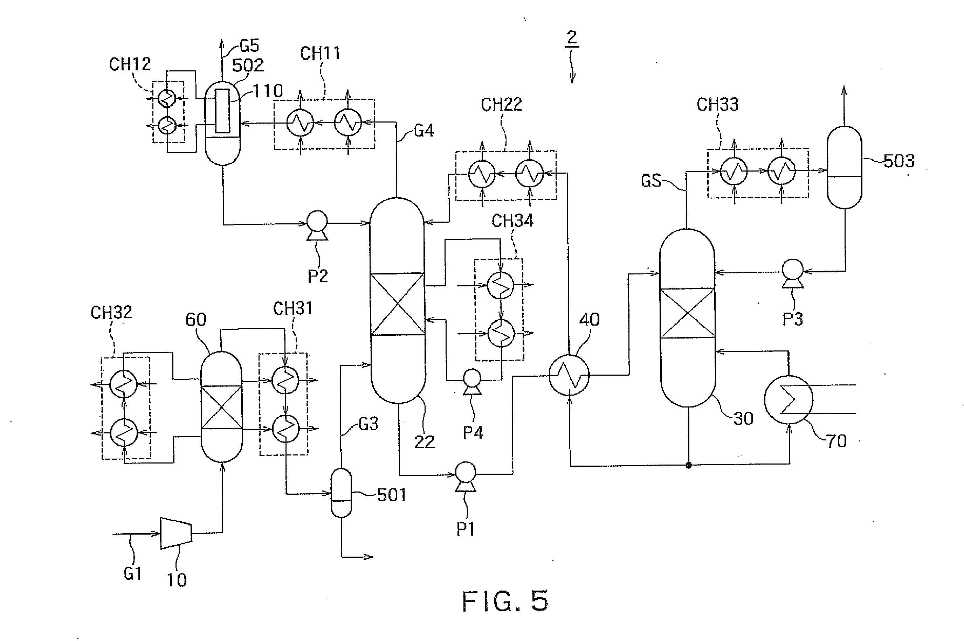

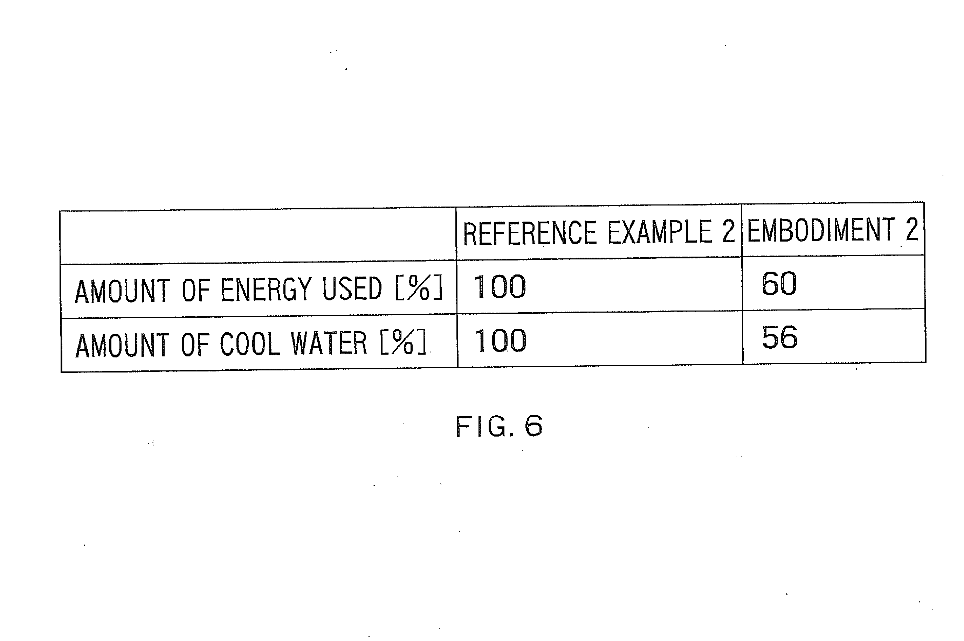

Now, a carbon dioxide capturing device according to Embodiment 2 is described with reference to FIG. 5 and FIG. 6.

FIG. 5 is a diagram showing the overall configuration of a carbon dioxide capturing device 2 according to the present embodiment. As apparent from the comparison with

FIG. 1(a), the carbon dioxide capturing device 2 shown in FIG. 5 includes an absorption tower 22 and a cooler CH34 instead of the absorption tower 20 according to Embodiment 1. In the present embodiment, the cooler CH34 is disposed outside the absorption tower 22, and a lean liquid LL in the absorption tower 22 is extracted during a first process and cooled in the cooler CH34, and the cooled lean liquid LL is again returned into the absorption tower 22.

As has been previously described, the lean liquid LL introduced to the absorption tower and a carbon dioxide containing exhaust gas G1 come into contact with each other in the absorption tower, and carbon dioxide is absorbed in the lean liquid LL by the first process. As the absorption reaction in this case is an exoergic reaction, the temperature in the absorption tower rises. The rise of the temperature in the absorption tower decreases absorbing performance.

Thus, in the present embodiment, the lean liquid LL in the absorption tower 22 is extracted during the first process, and introduced to and cooled by the cooler CH34 disposed outside the absorption tower 22. Further, the lean liquid LL cooled by the cooler CH34 is again supplied to the absorption tower 22 through a pump P4. The lean liquid LL reduced in temperature by this cooling process is introduced into the absorption tower 22, so that a lower temperature can be kept in the absorption tower 22 and carbon dioxide absorbing efficiency is improved as compared with the case where the lean liquid LL is not cooled. The temperature of the lean liquid LL after cooling is preferably 35°C or less. Therefore, the lean liquid LL is preferably also cooled through the second cooler CL2 by using not only the first cooling medium generated substantially without using power but also the second cooling medium cooled by use of power such as a chiller.

FIG. 6 is a table showing an example of the effect of reducing the cooling power energy by the carbon dioxide capturing device 2 according to the present embodiment. In Reference example 2, the first cooler CL1 is excluded from the configuration shown in FIG. 5, and the second cooling medium alone is used for cooling by the second cooler CL2. Capturing energy in Reference example 2 is regarded as a reference of 100% to find the cooling power energy reduction rate according to Embodiment 2 by using a process simulator. The comparison with Reference example 2 is also shown regarding the amount of necessary cooling water in the same manner. In the comparison, the same conditions are provided regarding the carbon dioxide capture amount and capture rate. It is found out from FIG. 6 that the present embodiment can reduce the cooling power energy to 56% as compared with Reference example 2.

In the present embodiment, its advantageous effects remain the same even when extractors and suppliers are disposed in a plurality of parts of the absorption tower 22 that need to be cooled. Moreover, the effect of reducing the cooling power energy remains unchanged even when the lean liquid LL to be extracted is all or part of the lean liquid LL running through the tower.

In the example described according to the present embodiment, the cooler CH34 for cooling the lean liquid LL in the absorption tower 22 is disposed outside the absorption tower 22, but this is not a restriction. For example, any device that can cool the lean liquid LL, such as an absorption tower built-in cooler, may be disposed inside the absorption tower 22.

According to the carbon dioxide capturing devices in the two embodiments described above, the carbon dioxide containing exhaust gas G1, the decarbonated gas G4, the carbon dioxide containing vapor GS, and the lean liquid LL are cooled through the first cooler CL1 by the first cooling medium generated substantially without using power before cooled by passing, through the second cooler CL2, the second cooling medium which is generated by cooling to a low temperature by use of power. Thus, power cooling energy can be reduced, and electric energy can be reduced accordingly. According to the carbon dioxide capturing method in at least one of the embodiments described above, the gases, the vapor, and the lean liquid LL are cooled by the first cooling medium generated substantially without using power before cooled by the second cooling medium which is generated by cooling to a low temperature by use of power. Thus, the cooling power energy can be reduced, and electric energy can be reduced accordingly.

Although the condensed water separated by the gas-liquid separator 503 is configured to be returned to the regeneration tower 30 in the embodiments described above, the condensed water can be returned to the absorption tower 20 or can be mixed with the lean liquid LL which has passed through the regenerated heat exchanger 40. Alternatively, the condensed water may be used for other purposes.

Furthermore, although the carbon dioxide capturing device includes the pumps P1 to P4 in the embodiments described above, not all of these pumps do not need to be provided as shown in FIG. 1(a) or FIG. 5, and the number of pumps can be decreased or increased.

The coolers CH11, CH12, CH22, and CH31 to CH34 are configured to be arranged outside the absorption tower 20 or the regeneration tower 30 in FIG. 1(a) or FIG. 5, but are not exclusively arranged in this manner, and, for example, may be arranged inside the absorption tower 20 or the regeneration tower 30. This holds true even when a gas condenser is disposed inside the absorption tower 20 or the regeneration tower 30.

Although the first cooler CL1 and the second cooler CL2 are used in the embodiments described above, the coolers are not limited thereto. Three or more coolers including, for example, a third cooler and a fourth cooler may be used for cooling. Moreover, although the two-step coolers CH are used in every cooler in the embodiments described above, the two-step coolers may be only applied to some of the coolers, for example, to the coolers for the lean liquid LL.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A carbon dioxide capturing device comprising:
an absorption tower, a gas containing carbon dioxide and a lean liquid which absorbs carbon dioxide from the gas being introduced to the absorption tower, the absorption tower bringing the gas and the lean liquid into contact with each other to generate a rich liquid in which carbon dioxide is absorbed and then discharging the rich liquid;
a regeneration tower configured to generate a lean liquid in which carbon dioxide is separated from the rich liquid by heating the rich liquid from the absorption tower and diffusing vapor containing carbon dioxide from the rich liquid, and then return the lean liquid to the absorption tower; and
a cooling unit configured to cools at least one of the gas, the lean liquid, and the rich liquid,
wherein the cooling unit comprises first and second coolers which are connected in series to each other and to which first and second cooling mediums are introduced, respectively,
the first cooling medium is generated outside the carbon dioxide capturing device without using power for cooling in the carbon dioxide capturing device,
the second cooling medium is generated by using power for cooling in the carbon dioxide capturing device, and
the first cooler is located upstream of the second cooler.

2. The carbon dioxide capturing device of claim 1,
wherein the cooling unit comprises a first cooling unit configured to cool the gas from which carbon dioxide is absorbed by the lean liquid.

3. The carbon dioxide capturing device of claim 1,
wherein the cooling unit comprises a second cooling unit configured to cool vapor containing carbon dioxide discharged by the heating of the rich liquid.

4. The carbon dioxide capturing device of claim 1,
wherein the cooling unit comprises a third cooling unit configured to cool the lean liquid from the regeneration tower.

5. The carbon dioxide capturing device of claim 1,
wherein the cooling unit comprises a fourth cooling unit configured to cool the lean liquid in the absorption tower.

6. The carbon dioxide capturing device of claim 1,
wherein the gas contains sulfur oxide,
the carbon dioxide capturing device further comprises a desulfurizer configured to remove sulfur oxide contained in the gas, and
the cooling unit comprises a fifth cooling unit configured to cool the desulfurizer.

7. The carbon dioxide capturing device of claim 6, further comprising a first water remover which is provided between the desulfurizer and the absorption tower and which removes water in the gas from the desulfurizer;
wherein the cooling unit comprises a sixth cooling unit which is provided between the desulfurizer and the water remover and which cools the gas from the desulfurizer.

8. The carbon dioxide capturing device of claim 1, further comprising a dispersion prevention unit configured to prevent the dispersion of an absorbing liquid component in at least one of the absorption tower and the regeneration tower,
wherein the cooling unit comprises a seventh cooling unit configured to cool the dispersion prevention unit.

9. The carbon dioxide capturing device of claim 8, further comprising a second water remover configured to remove water in the gas from the absorption tower,
wherein the dispersion prevention unit is provided inside the second water remover to prevent the dispersion of an absorbing liquid component in the gas from which carbon dioxide is absorbed by the lean liquid.

10. A carbon dioxide capturing method comprising:
bringing a carbon dioxide containing gas and a lean liquid into contact with each other to generate a rich liquid in which carbon dioxide is absorbed;
heating the rich liquid to diffuse vapor containing carbon dioxide, and generating a lean liquid in which carbon dioxide is separated from the rich liquid, and then reusing the lean liquid to absorb carbon dioxide; and
cooling at least one of the gas, the lean liquid, and the rich liquid by a first medium and then cooling at least one of the gas, the lean liquid, and the rich liquid by a second cooling medium,
wherein the first cooling medium is generated without using power for cooling, and used for the cooling that uses power for moving, and
the second cooling medium is generated by using power for cooling.
